# EUROPEAN PATENT APPLICATION

(11) **EP 4 718 589 A1**
(43) Date of publication of application: **01.04.2026**
(21) Application number: 24920706.9
(22) Date of filing: 08.11.2024
(51) Int. Cl.: H01M 10/658, H01M 10/625, H01M 50/367, H01M 50/342

(54) **BATTERY PACK AND VEHICLE COMPRISING SAME**

(30) Priority: 26.01.2024 KR 20240012306
(71) Applicant: LG Energy Solution, Ltd., Seoul 07335 (KR)
(72) Inventor: PARK, So-Jeong, Daejeon 34122 (KR); AHN, Jun-Young, Daejeon 34122 (KR); OH, Kwang-Keun, Daejeon 34122 (KR); LEE, Yong-Ho, Daejeon 34122 (KR); JUNG, In-Hyuk, Daejeon 34122 (KR); YANG, Jin-Oh, Daejeon 34122 (KR)
(74) Representative: Plasseraud IP
(86) International application number: PCT/KR2024/017599
(87) International publication number: WO 2025/159291

(57) **Abstract**

Disclosed is a battery pack, which includes a plurality of battery cells; a pack case configured to accommodate the plurality of battery cells; and a side frame configured to support the plurality of battery cells within the pack case, the side frame having a heat propagation prevention unit for preventing heat propagation toward adjacent battery cells when a thermal event occurs in at least one battery cell among the plurality of battery cells.

## Description

### TECHNICAL FIELD

The present disclosure relates to a battery pack and a vehicle including the battery pack, and more particularly, to a battery pack with improved safety and a vehicle including the battery pack.

This application is based on and claims priority from Korean Patent Application No. 10-2024-0012306, filed on January 26, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

However, when a plurality of battery cells are densely packed in a narrow space as above, the battery cells may be vulnerable to thermal events. In particular, when an event such as thermal runaway occurs in one battery cell, high-temperature gas, flame, heat, etc. may be generated. If such gas, flame, heat, etc. are transmitted to other battery cells included in the same battery pack, an explosive chain reaction situation such as thermal propagation may occur. Also, such a chain reaction may cause an accident such as a fire or explosion in the corresponding battery pack.

Furthermore, in the case of medium- to large-sized battery packs such as electric vehicles, the risk of thermal chain reaction may be even greater because a large number of battery cells are included to increase output and/or capacity. In addition, in the case of battery packs mounted on electric vehicles, etc., users such as drivers may exist in the vicinity. Therefore, if a thermal event occurring in the battery pack is not properly controlled and a chain reaction occurs, it may cause not only great property damage but also human casualties.

Therefore, it is needed to provide a battery pack, which may prevent heat propagation toward adjacent battery cells during a thermal event, and a vehicle including the battery pack.

### DISCLOSURE

### Technical Problem

Therefore, the present disclosure is directed to providing a battery pack capable of preventing heat propagation toward adjacent battery cells during a thermal event, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack comprising: a plurality of battery cells; a pack case configured to accommodate the plurality of battery cells; and a side frame configured to support the plurality of battery cells within the pack case, the side frame having a heat propagation prevention unit for preventing heat propagation toward adjacent battery cells when a thermal event occurs in at least one battery cell among the plurality of battery cells.

Also, preferably, the side frame may support the battery cells without interfering with a venting portion provided on a bottom portion of the plurality of battery cells, and the heat propagation prevention unit may be arranged to protrude from a bottom portion of the side frame so that the heat propagation prevention unit is disposed closer to a bottom portion of the pack case than the venting portion.

Also, preferably, the heat propagation prevention unit may be filled with a predetermined filling member.

Also, preferably, the filling member may be a potting resin.

Also, preferably, the heat propagation prevention unit may be formed to have a predetermined height at a bottom portion of the side frame.

Also, preferably, the predetermined height may be at least 2.5 mm.

Also, preferably, a venting space may be formed between the pack case and the side frame to guide venting of gas generated during the thermal event.

Also, preferably, the venting space may be provided at a bottom portion of the heat propagation prevention unit.

Also, preferably, the venting space may have a height of at least 5 mm.

Also, preferably, the pack case may include a base plate having a plurality of protrusions for supporting a bottom portion of the side frame; and an outer side wall coupled with the base plate to form a side surface of the pack case, and the venting space may be formed between the plurality of protrusions.

Also, preferably, the plurality of protrusions may be integrally formed with the base plate.

Also, preferably, the battery pack may further comprise at least one venting device installed on the outer side wall and communicated with the venting space.

Also, preferably, the side frame may include a pair of side walls provided at outermost sides of the side frame; and a plurality of side structures provided between the pair of side walls to support the plurality of battery cells, and the heat propagation prevention unit may be provided at a bottom portion of the pair of side walls and a bottom portion of the plurality of side structures.

Also, preferably, the heat propagation prevention unit may be formed to protrude to a predetermined height from the bottom portion of the pair of side walls and the bottom portion of the plurality of side structures.

In addition, the present disclosure also provides a vehicle, comprising at least one battery pack according to the former embodiments.

### Advantageous Effects

According to various embodiments as above, it is possible to provide a battery pack capable of preventing heat propagation toward adjacent battery cells during a thermal event, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is an exploded perspective view showing the battery pack according to an embodiment of the present disclosure.
FIG. 3 is a drawing for illustrating a cell array structure of the battery pack of FIG. 2.
FIG. 4 is a drawing for illustrating a bottom portion of the cell array structure of FIG. 3.
FIG. 5 is an enlarged view showing the main part of the cell array structure of FIG. 4.
FIG. 6 is a drawing showing the cell array structure of FIG. 4, from which a filling member is removed.
FIG. 7 is a cross-sectional side view showing the main part in a width direction of the battery pack according to an embodiment of the present disclosure.
FIG. 8 is a drawing for illustrating a pack case of the battery pack of FIG. 2.
FIG. 9 is a drawing for illustrating a gas discharge path of the battery pack according to an embodiment of the present disclosure.
FIG. 10 is an enlarged view showing a part A of the battery pack of FIG. 9.
FIG. 11 is an enlarged view showing a part B of the battery pack of FIG. 9.
FIG. 12 is a partially exploded perspective view showing the cell array structure of FIG. 3.
FIG. 13 is a drawing for illustrating a side structure of a side frame of the cell array structure of FIG. 12.
FIG. 14 is a drawing for illustrating a bottom portion of the side structure of FIG. 13.
FIG. 15 is a drawing for illustrating the arrangement of battery cells supported on the side structure of FIG. 14.
FIG. 16 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

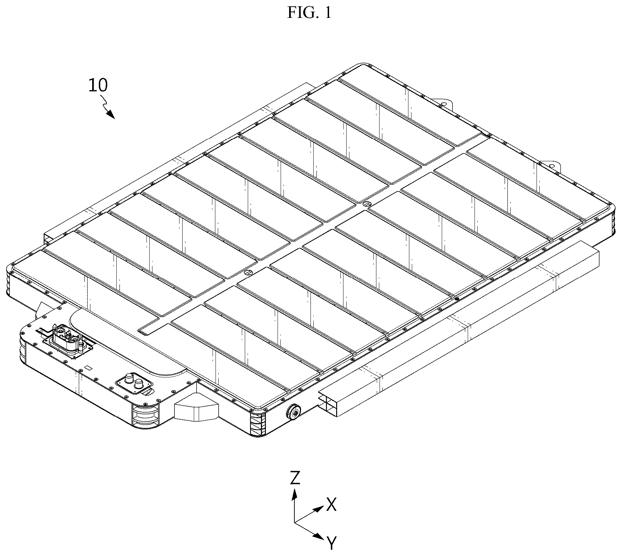

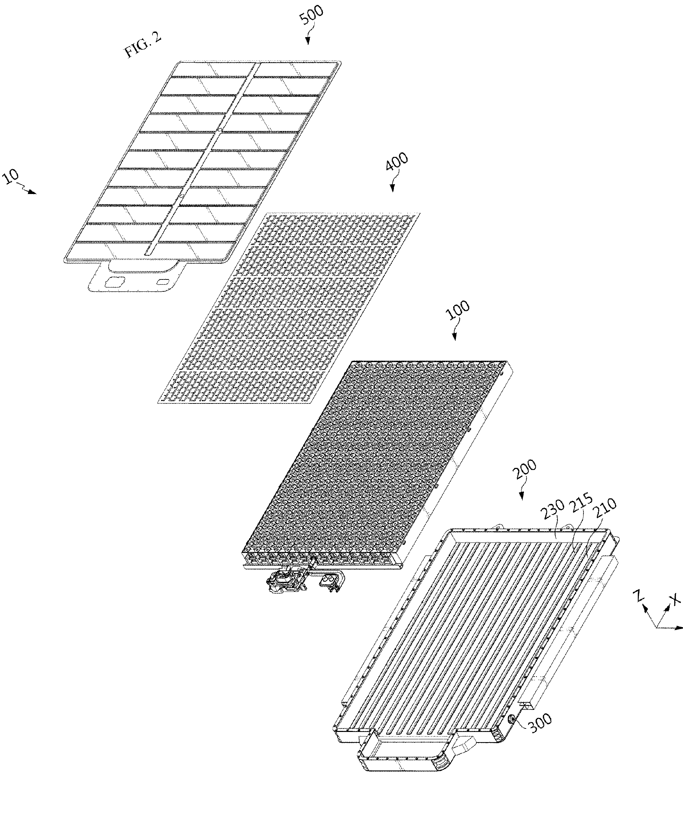

FIG. 1 is a diagram for illustrating a battery pack according to an embodiment of the present disclosure, and FIG. 2 is an exploded perspective view showing the battery pack according to an embodiment of the present disclosure.

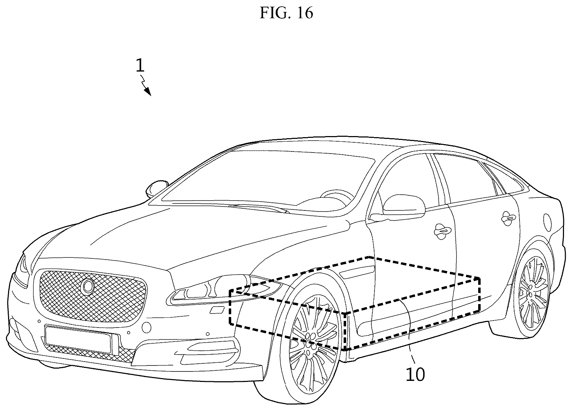

Referring to FIGS. 1 and 2, the battery pack 10 is provided in a vehicle 1 (see FIG. 16) or an energy storage system, explained later, and may be provided as an energy source for the vehicle or the energy storage system. The battery pack 10 may be configured to include a plurality of battery cells to increase output and/or capacity, thereby forming a medium- to large-sized battery pack.

Hereinafter, the battery pack 10 according to this embodiment will be described in more detail with reference to the related drawings.

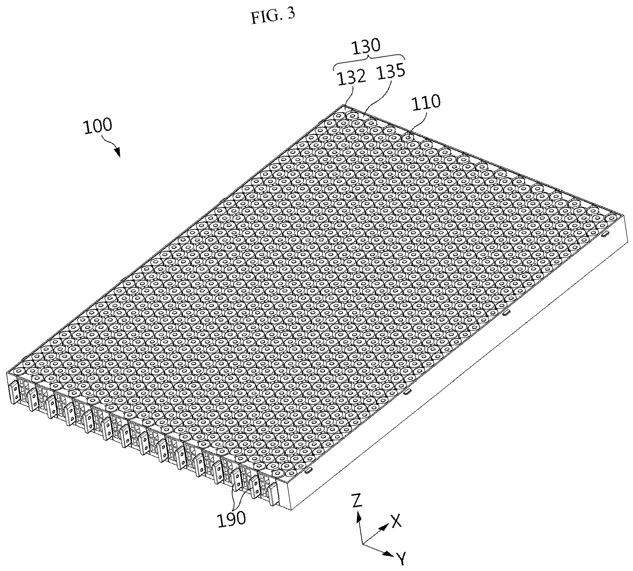

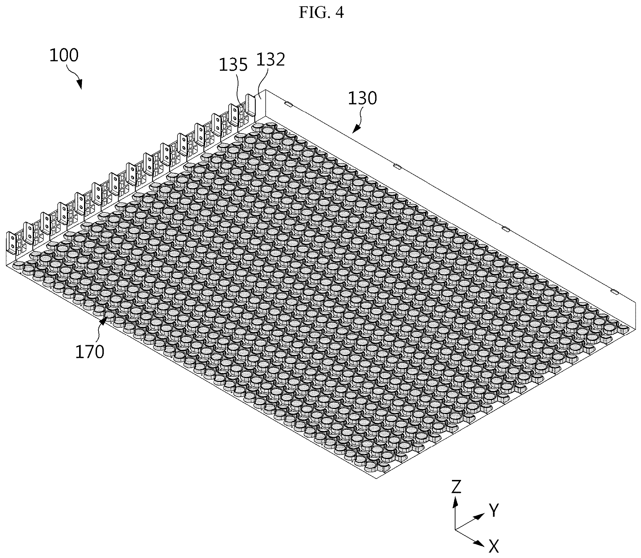

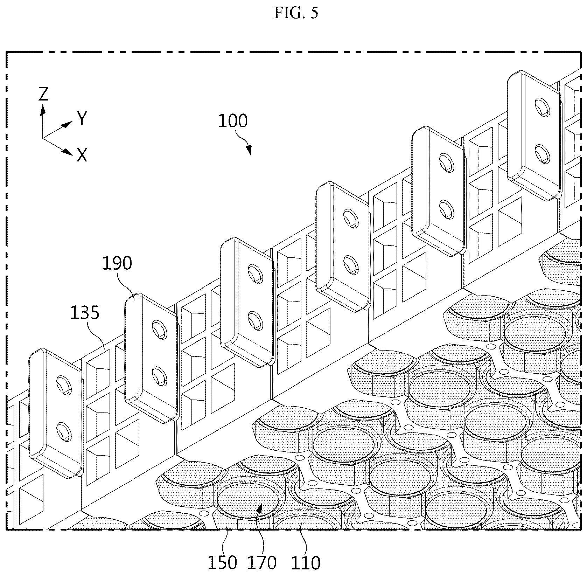

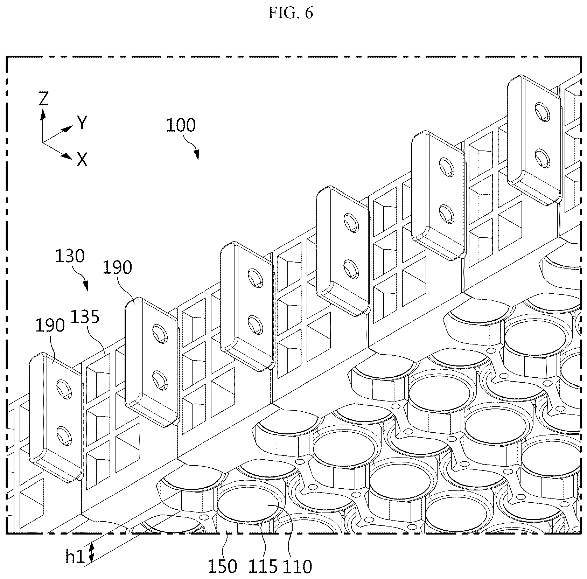

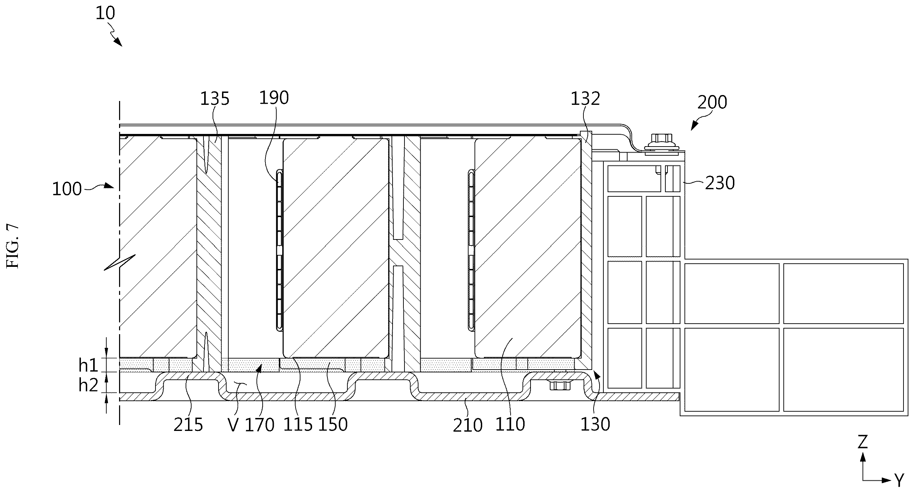

FIG. 3 is a drawing for illustrating a cell array structure of the battery pack of FIG. 2, FIG. 4 is a drawing for illustrating a bottom portion of the cell array structure of FIG. 3, FIG. 5 is an enlarged view showing the main part of the cell array structure of FIG. 4, FIG. 6 is a drawing showing the cell array structure of FIG. 4, from which a filling member is removed, and FIG. 7 is a cross-sectional side view showing the main part in a width direction of the battery pack according to an embodiment of the present disclosure.

Referring to FIGS. 3 to 7 along with FIGS. 1 and 2 above, the battery pack 10 may include a plurality of battery cells 110, a pack case 200, and a side frame 130.

The plurality of battery cells 110 are secondary batteries, and may be provided as cylindrical secondary batteries, pouch-shaped secondary batteries, or rectangular secondary batteries. Hereinafter, in this embodiment, the plurality of battery cells 110 are described as cylindrical secondary batteries. The plurality of battery cells 110 may be arranged in multiple rows in both the longitudinal direction (X-axis direction) and the width direction (Y-axis direction) of the pack case 200 in order to implement a large capacity of the battery pack 10. For example, the plurality of battery cells 110 may be arranged in a matrix form within the pack case 200.

The pack case 200 may accommodate the plurality of battery cells 110. To this end, the pack case 200 may have an accommodation space capable of accommodating the plurality of battery cells 110. In addition to the plurality of battery cells 110, various components constituting the battery pack 10 may be accommodated in the accommodation space.

The side frame 130 may support the plurality of battery cells 110 within the pack case 200. The side frame 130 may constitute a cell array structure 100, explained later, together with the battery cells 110. The cell array structure 100 will be described later in more detail.

The side frame 130 may include a heat propagation prevention unit 150 to prevent heat propagation toward adjacent battery cells 110 when a thermal event occurs in at least one battery cell 110 among the plurality of battery cells 110. When the thermal event occurs, a flame, etc. may be generated in the battery cell 110 where the event occurs. The heat propagation prevention unit 150 may be configured to block the flame from flowing toward adjacent battery cells 110.

According to an embodiment of the present disclosure, since the heat propagation prevention unit 150 provided in the side frame 130 blocks the flame generated in an event cell during a thermal event from flowing toward adjacent battery cells 110, it is possible to effectively prevent a thermal chain reaction that may be caused by heat propagation during a thermal event.

The side frame 130 may support the battery cells without interfering with a venting portion 115 provided on the bottom portion of the plurality of battery cells 110. The venting portion 115 of the plurality of battery cells 110 may be provided on the bottom portion of the battery cells 110 to discharge a flame or gas generated therein during a thermal event to the lower portion of the battery cells 110. The venting portion 115 may be formed on the bottom portion of the battery cells 110 to melt or fracture at a predetermined pressure or temperature or above.

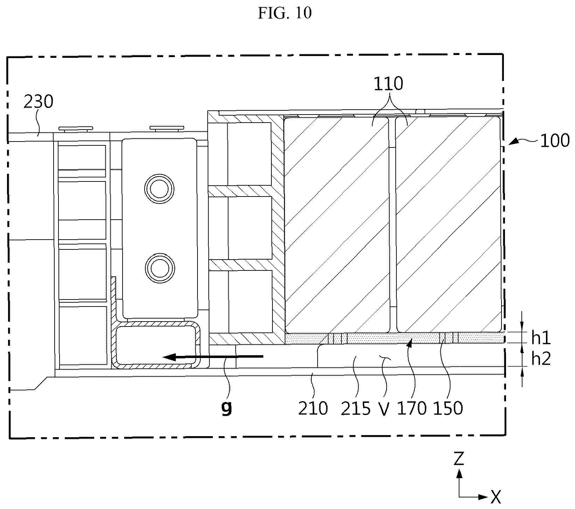

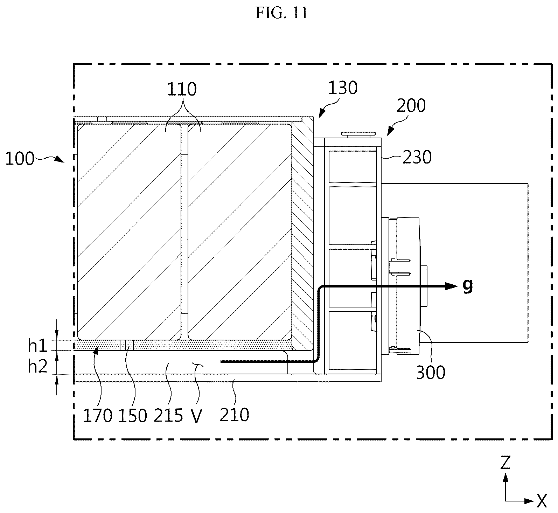

The heat propagation prevention unit 150 may be arranged to protrude from the bottom portion of the side frame 130 so that the heat propagation prevention unit 150 is disposed closer to the bottom portion of the pack case 200 than the venting portion 115. The heat propagation prevention unit 150 may form a predetermined barrier structure at the lower side (-Z-axis direction) of the venting portion 115 of the battery cells 110. Accordingly, the heat propagation prevention unit 150 may guide the flame or gas g to the lower side (-Z-axis direction) of the heat propagation prevention unit 150 while restricting lateral movement of the flame or gas g (see FIGS. 10 and 11) that escapes out of the venting portion 115 of the event cell during a thermal event of the battery cell 110.

The heat propagation prevention unit 150 may be filled with a predetermined filling member 170. The filling member 170 is filled in the heat propagation prevention unit 150 at the bottom portion of the side frame 130 to primarily block a flame or gas generated in an event cell during the thermal event and guide the flame or gas toward the bottom portion (-Z-axis direction) of the side frame 130.

The filling member 170 may be provided as a potting resin. The potting resin may be formed by injecting a resin material in a thin state toward the plurality of battery cells 110 and hardening the resin material. Here, the resin material may be injected at a room temperature of about 15°C to 25°C to prevent heat damage to the plurality of battery cells 110.

The filling member 170 may contain a material having high heat resistance performance. Accordingly, the filling member 170 may effectively prevent thermal runaway toward adjacent battery cells 110 when a thermal event such as overheating occurs in at least one specific battery cell 110 among the plurality of battery cells 110.

The filling member 170 may contain a material having high flame retardant performance. Accordingly, the filling member 170 may minimize the risk of fire when a thermal event such as overheating occurs in at least one specific battery cell 110 among the plurality of battery cells 110.

The filling member 170 may contain a silicone resin. The present disclosure is not limited thereto, and the filling member 170 may also contain other resin materials that may improve the fixing and heat dissipation efficiency of the battery cells 100, in addition to the silicone resin.

According to an embodiment of the present disclosure, the cooling performance of the battery cells 110 may be further improved by increasing the heat dissipation efficiency of the plurality of battery cells 110 through the filling member 170.

The filling member 170 may perform an insulating role to prevent current flow to adjacent battery cells 110 when damage occurs due to an abnormal situation in at least one specific battery cell 110 among the plurality of battery cells 110.

The filling member 170 may contain a material having high specific heat performance. Accordingly, the filling member 170 may increase the thermal mass to delay the temperature rise of the battery cells 110 even in situations such as rapid charging and discharging of the battery cells 110, thereby preventing a rapid temperature rise of the battery cells 110.

The filling member 170 may contain a glass bubble. The glass bubble may lower the specific gravity of the filling member 170 and increase the energy density for weight.

The filling member 170 may be filled between the battery cells 110 in addition to the heat propagation prevention unit 150. According to an embodiment of the present disclosure, the battery cells 110 may be more stably fixed to the side frame 130 through the filling member 170.

The filling member 170 may be continuously filled without a break space or a separation space between the battery cells 110 and in the heat propagation prevention unit 150 in the height direction (Z-axis direction) of the battery cells 110. Since the filling member 170 according to an embodiment of the present disclosure is continuously filled without a break between the battery cells 110 and in the heat propagation prevention unit 150, it is possible t0 realize even heat distribution without occurrence of heat distribution deviation in the height direction (Z-axis direction) of the battery cells 110, thereby significantly improving the cooling performance of the battery pack 10. Also, the filling member 170 may be continuously filled between the bus bar assembly 400 and the battery cells 110 and in the heat propagation prevention unit 150 without a break space or a separation space between the bus bar assembly 400 and the battery cells 110.

The heat propagation prevention unit 150 may be formed to have a predetermined height (h1) from the bottom portion of the side frame 130. The predetermined height (h1) may be a height from the bottom portion of the battery cells 110 mounted on the side frame 130 to the lower end of the side frame 130. That is, the heat propagation prevention unit 150 may be formed longer in the lower direction (in the -Z-axis direction) by the predetermined height (h1) than the bottom portion of the battery cells 110. The predetermined height (h1) may be a height that may induce movement of the flame or gas downward from the side frame 130 while limiting lateral movement of the flame or gas generated during the thermal event, and may be at least 2.5 mm.

The filling member 170 may be filled within the heat propagation prevention unit 150 to the predetermined height (h). Meanwhile, as described above, the filling member 170 may also be filled between the battery cells 110 within the side frame 130 to the predetermined height (h) or more.

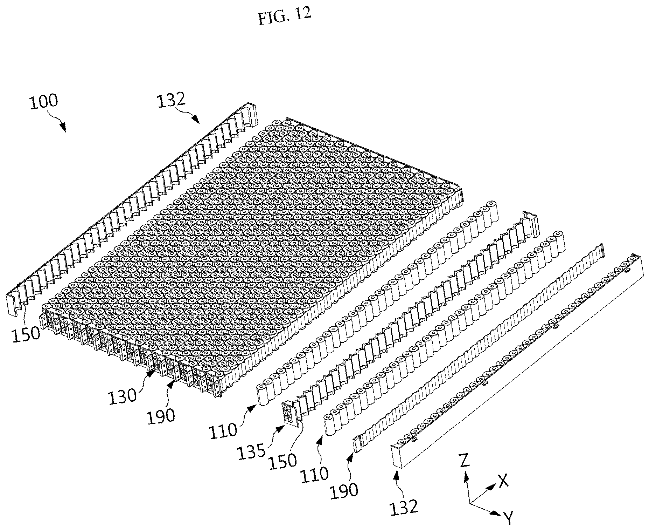

Between the pack case 200 and the side frame 130, a venting space V may be formed to guide venting of the gas g generated during the thermal event. The venting space V may guide directional venting of the gas g (see FIGS. 11 and 12) generated during the thermal event in a specific direction, together with the heat propagation prevention unit 150.

The venting space V may be provided in the bottom portion of the heat propagation prevention unit 150. The venting space V and the heat propagation prevention unit 150 may guide downward venting in the bottom portion of the battery cells 110.

The height (h2) of the venting space V may be higher than the height (h1) of the heat propagation prevention unit 150. Preferably, the height (h2) of the venting space V may be at least twice the height (h1) of the heat propagation prevention unit 150. In this embodiment, the height (h2) of the venting space V may be at least 5 mm.

During the thermal event, the filling member 170 may be at least partially separated from the heat propagation prevention unit 150 by a flame or gas generated in the event cell. The filling member 170 separated from the heat propagation prevention unit 150 may accumulate in the venting space V. At this time, if the venting space V does not have sufficient space, the venting space V may be at least partially blocked by the filling member 170 separated from the heat propagation prevention unit 150. If the venting space V is blocked, the gas g generated during the thermal event may stagnate, increasing the internal pressure in the venting space V, which may increase the risk of secondary damage such as an explosion. For example, if the height (h2) of the venting space V is similar to or lower than the height (h1) of the heat propagation prevention unit 150, there is a high possibility that the venting space V may be closed due to the filling member 170 separated from the inside of the heat propagation prevention unit 150. In an embodiment of the present disclosure, since the height (h2) of the venting space V is higher than the height (h1) of the heat propagation prevention unit 150, the venting space V may be sufficiently secured, thereby effectively preventing the closure of the venting space V, which may be caused by the filling member 170 separated from the heat propagation prevention unit 150 during a thermal event. In particular, in an embodiment of the present disclosure, since the height (h2) of the venting space V is at least twice the height (h1) of the heat propagation prevention unit 150, even if the filling member 170 is laminated in the venting space V to the same extent as the height (h1) of the heat propagation prevention unit 150, a venting path that guides the gas flow within the venting space V may be more reliably secured without blocking the venting space V.

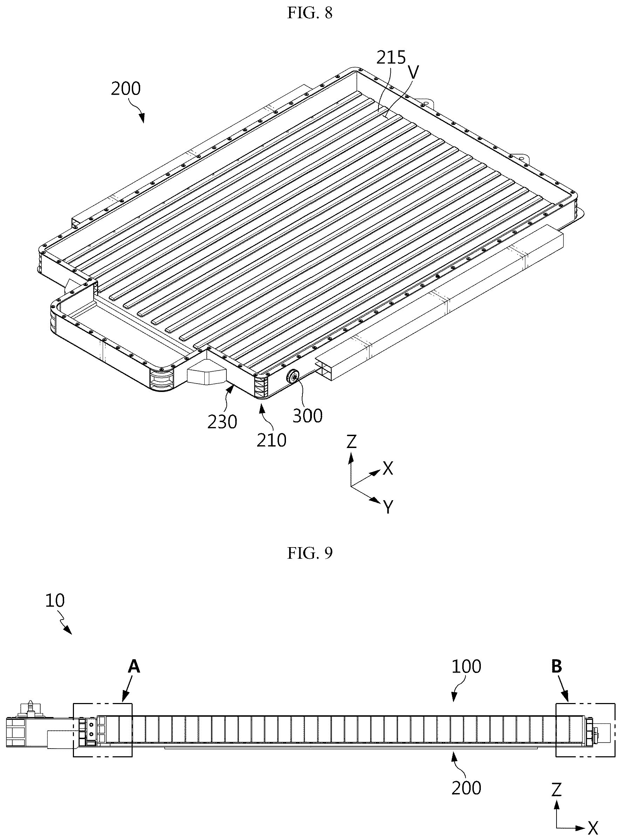

FIG. 8 is a drawing for illustrating a pack case of the battery pack of FIG. 2.

Referring to FIG. 8 along with the preceding drawings, the pack case 200 may include a base plate 210 and an outer side wall 230.

The base plate 210 may have a plurality of protrusions 215 that support the bottom portion of the side frame 130. The bottom portion of the side frame 130 may be mounted on the plurality of protrusions 215. An adhesive member may be provided to the plurality of protrusions 215 for more stable support and fixation of the side frame 130. The plurality of protrusions 215 may also have a buffer member for more stable support and fixation of the side frame 130. In addition, the plurality of protrusions 215 may also have both the adhesive member and the buffer member.

The outer side wall 230 may be coupled with the base plate 210. The outer side wall 230 may form a side surface of the pack case 200.

The venting space V may be formed between the plurality of protrusions 215. Accordingly, the venting space V may be provided in plurality. The plurality of venting spaces V may be provided to have a predetermined length along the longitudinal direction (X-axis direction) of the pack case 200. The plurality of venting spaces V may be provided to communicate with the venting device 300, explained later, while inducing directional venting in a specific direction.

The plurality of protrusions 215 may be integrally formed with the base plate 210. For example, the plurality of protrusions 215 may be integrally formed through a forming process from the base plate 210. Accordingly, in an embodiment of the present disclosure, the venting space V may be formed through the plurality of protrusions 215 integrally formed with the base plate 210 without adding a separate component, etc. for providing the venting space V.

The battery pack 10 may include at least one venting device 300.

The at least one venting device 300 is installed on the outer side wall 230 and may be communicated with the venting space V. The at least one venting device 300 may discharge the gas g (see FIGS. 10 and 11) within the venting space V to the outside of the pack case 200 during the thermal event.

The venting device 300 may be provided in plurality. The plurality of venting devices 300 may be provided on both side surfaces (+Y-axis direction and -Y-axis direction) along the width direction (Y-axis direction) of the outer side wall 230 and on the rear side surface (+X-axis direction) along the longitudinal direction (X-axis direction) of the outer side wall 230.

Hereinafter, the gas discharge path of the battery pack 10 according to an embodiment of the present disclosure during a thermal event will be described in more detail.

FIG. 9 is a drawing for illustrating a gas discharge path of the battery pack according to an embodiment of the present disclosure, FIG. 10 is an enlarged view showing a part A of the battery pack of FIG. 9, and FIG. 11 is an enlarged view showing a part B of the battery pack of FIG. 9.

Referring to FIGS. 9 to 11, in the battery pack 10, a thermal event may occur in a specific battery cell 110. In the battery cell 110 where the event occurs, a flame or gas g may be generated through the venting portion 115 (see FIG. 7) of the bottom portion. The heat propagation prevention unit 150 may force movement of the flame or gas g toward the bottom of the event cell while blocking movement of the flame or gas g toward the side surface of the event cell. In addition, the filling member 170 filled in the heat propagation prevention unit 150 may primarily block and weaken the flame or gas g. After that, the gas g may flow in the venting space V provided at the lower side of the heat propagation prevention unit 150 and be quickly discharged out of the venting device 300.

As such, according to an embodiment of the present disclosure, during the thermal event, the flame may be effectively prevented from entering the battery cells 110 around the event cell through the heat propagation prevention unit 150 and the filling member 190, and the gas g may be quickly discharged to the outside of the pack case 200 through the venting space V. Therefore, according to an embodiment of the present disclosure, heat propagation may be effectively prevented during the thermal event, thereby minimizing secondary damage that may cause fire or explosion.

Hereinafter, the cell array structure 100 and other components of the battery pack 10 according to an embodiment of the present disclosure will be described in more detail.

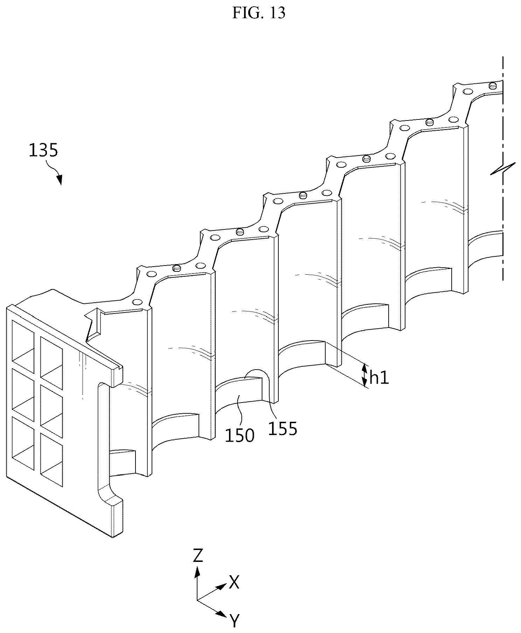

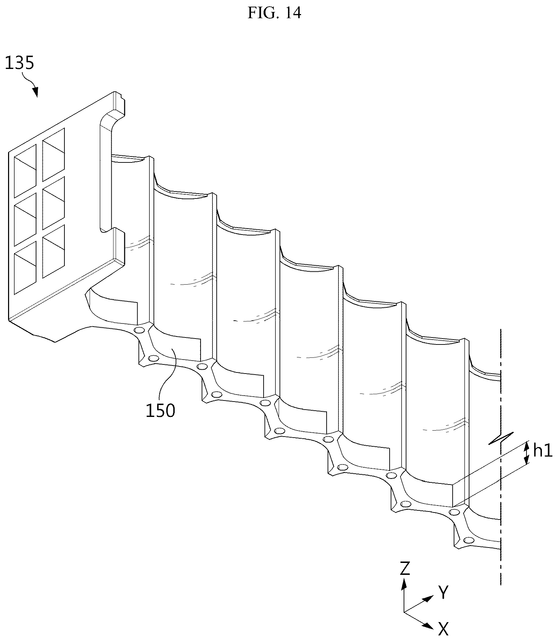

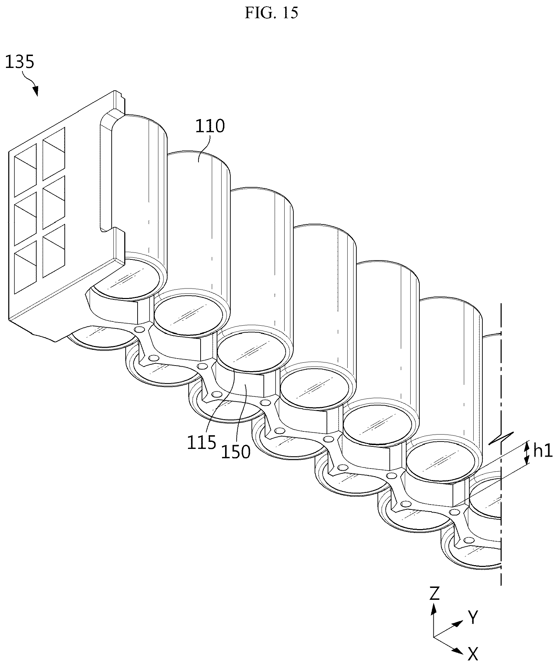

FIG. 12 is a partially exploded perspective view showing the cell array structure of FIG. 3, FIG. 13 is a drawing for illustrating a side structure of a side frame of the cell array structure of FIG. 12, FIG. 14 is a drawing for illustrating a bottom portion of the side structure of FIG. 13, and FIG. 15 is a drawing for illustrating the arrangement of battery cells supported on the side structure of FIG. 14.

Referring to FIGS. 12 to 15 along with FIGS. 1 to 3, the battery pack 10 may include the cell array structure 100. The cell array structure 100 may include the battery cells 110 and the side frame 130.

The side frame 130 may include a pair of side walls 132 and a plurality of side structures 135.

The pair of side walls 132 may be provided at both outermost sides of the side frame 130, respectively. The pair of side walls 132 are formed with a predetermined length in the longitudinal direction (X-axis direction) of the battery pack 10 and may accommodate the plurality of battery cells 110, respectively.

The pair of side walls 132 may be coupled to the outer side wall 230 of the pack case 200. Therefore, the cell array structure 100 may be more stably fixed within the pack case 200 when being accommodated within the pack case 200.

The plurality of side structures 135 may be provided between the pair of side walls 132. The plurality of side structures 135 may support the plurality of battery cells 110, respectively.

The plurality of side structures 135 are formed to have a predetermined length in the longitudinal direction (X-axis direction) of the battery pack 10 and may accommodate the plurality of battery cells 110 while supporting the battery cells 110 at both sides in the width direction (Y-axis direction) of the battery pack 10.

The heat propagation prevention unit 150 may be provided on the bottom portion of the pair of side walls 132 and the bottom portion of the plurality of side structures 135. The heat propagation prevention unit 150 may be formed integrally on the bottom portion of the pair of side walls 132 and the plurality of side structures 135.

The heat propagation prevention unit 150 may be formed to protrude to a predetermined height (h1) from the bottom portion of the pair of side walls 132 and the bottom portion of the plurality of side structures 132.

The cell mounting portion 155 may be formed at the upper portion of the heat propagation prevention unit 150. The cell mounting portion 155 may support an edge of the bottom portion of the battery cells 110 when the battery cells 110 are accommodated within the pair of side walls 132 and the plurality of side structures 135. Here, the cell mounting portion 155 may be provided so as not to interfere with the venting portion 115 of the battery cells 110. The cell mounting portion 155 may have a predetermined width that may support only an edge of the bottom portion of the battery cells 110 while exposing the venting portion 115 to the bottom portion of the heat propagation prevention unit 150. In an embodiment of the present disclosure, when the battery cells 110 are accommodated within the pair of side walls 132 and the plurality of side structures 135, the battery cells 110 may be more stably supported via the cell mounting portion 155 of the heat propagation prevention unit 150 without causing interference with the venting portion 115 of the battery cells 110.

The cell array structure 100 may include a cooling tube 190.

The cooling tube 190 is for cooling the plurality of battery cells 110 and may be formed to a predetermined length along the longitudinal direction (X-axis direction) of the battery pack 10. The cooling tube 190 is arranged between the plurality of battery cells 110 and may be arranged to contact the facing outer surfaces of the plurality of battery cells 110 so as to increase cooling performance. A cooling channel for the flow of a cooling medium may be provided in the cooling tube 190.

The cooling tube 190 may be provided in plurality. The plurality of cooling tubes 190 may be arranged to be spaced apart from each other by a predetermined distance in the width direction (Y-axis direction) of the battery pack 10. The plurality of cooling tubes 190 may be connected to communicate with each other through a cooling pipe or the like, and may be connected to an external cooling device or the like for the flow of the cooling medium.

Referring to FIGS. 1 and 2 again, the battery pack 10 may include a bus bar assembly 400.

The bus bar assembly 400 is provided at the upper side of the cell array structure 100 and may be electrically connected to the plurality of battery cells 110. In this embodiment, both the positive and negative electrodes of the battery cells 110 may be provided at the upper side of the cell array structure 100. Accordingly, the electrical connection between the bus bar assembly 400 and the battery cells 110 may be implemented all at the upper side of the cell array structure 100.

The battery pack 10 may include a pack cover 500.

The pack cover 500 may cover the upper side of the cell array structure 100. The pack cover 500 is coupled to the pack case 200, and specifically, may be bolted to the outer side wall 230 through a bolting member, etc. The pack cover 500 may have a guide opening that may guide a connection of a cooling pipe assembly, explained later, and an electrical unit to an external device, etc.

The battery pack 10 may include a cooling pipe assembly.

The cooling pipe assembly is configured to supply the cooling medium to the cooling tubes 190 of the cell array structure 100 and to discharge the cooling medium, which has circulated through the cooling tubes 190, to the outside of the pack case 200, and may connect the plurality of cooling tubes 190 and the external cooling device.

The cooling medium may be provided as a cooling fluid that may circulate through the cooling tubes 190 while cooling the battery cells 110. For example, the cooling medium may be provided as a cooling water. The present disclosure is not limited thereto, and the cooling medium may be provided as any other cooling fluid that may circulate through the cooling tubes 190 while cooling the battery cells 110.

The battery pack 10 may include an electrical unit.

The electrical unit is provided in the pack case 200 and may include electrical components such as a BMS that controls the cell array structure 100 of the battery pack 10. The electrical unit may further include components such as a current sensor, a fuse, and a service plug.

FIG. 16 is a drawing for illustrating a vehicle according to an embodiment of the present disclosure.

Referring to FIG. 16, the vehicle 1 according to an embodiment of the present disclosure may include at least one battery pack 10 according to the above-described embodiment of the present disclosure. In addition, the vehicle 1 according to an embodiment of the present disclosure may further include various other components included in a vehicle, in addition to the battery pack 10. For example, the vehicle 1 according to an embodiment of the present disclosure may further include a vehicle body, a motor, and a control device such as an ECU (electronic control unit), in addition to the battery pack 10 according to an embodiment of the present disclosure.

In addition, the battery pack 10 according to an embodiment of the present disclosure may be provided to other devices, instruments, and equipment, such as an energy storage device (ESS) that uses secondary batteries, in addition to the vehicle 1.

According to various embodiments as above, it is possible to provide a battery pack 10 capable of preventing heat propagation toward adjacent battery cells 110 during a thermal event, and a vehicle 1 including the battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a plurality of battery cells;
a pack case configured to accommodate the plurality of battery cells; and
a side frame configured to support the plurality of battery cells within the pack case, the side frame having a heat propagation prevention unit for preventing heat propagation toward adjacent battery cells when a thermal event occurs in at least one battery cell among the plurality of battery cells.

2. The battery pack according to claim 1,
wherein the side frame supports the battery cells without interfering with a venting portion provided on a bottom portion of the plurality of battery cells, and
wherein the heat propagation prevention unit is arranged to protrude from a bottom portion of the side frame so that the heat propagation prevention unit is disposed closer to a bottom portion of the pack case than the venting portion.

3. The battery pack according to claim 1,
wherein the heat propagation prevention unit is filled with a predetermined filling member.

4. The battery pack according to claim 3,
wherein the filling member is a potting resin.

5. The battery pack according to claim 1,
wherein the heat propagation prevention unit is formed to have a predetermined height at a bottom portion of the side frame.

6. The battery pack according to claim 5,
wherein the predetermined height is at least 2.5 mm.

7. The battery pack according to claim 1,
wherein a venting space is formed between the pack case and the side frame to guide venting of gas generated during the thermal event.

8. The battery pack according to claim 7,
wherein the venting space is provided at a bottom portion of the heat propagation prevention unit.

9. The battery pack according to claim 7,
wherein the venting space has a height of at least 5 mm.

10. The battery pack according to claim 7,
wherein the pack case includes:
a base plate having a plurality of protrusions for supporting a bottom portion of the side frame; and
an outer side wall coupled with the base plate to form a side surface of the pack case,
wherein the venting space is formed between the plurality of protrusions.

11. The battery pack according to claim 10,
wherein the plurality of protrusions are integrally formed with the base plate.

12. The battery pack according to claim 10, further comprising:
at least one venting device installed on the outer side wall and communicated with the venting space.

13. The battery pack according to claim 1,
wherein the side frame includes:
a pair of side walls provided at outermost sides of the side frame; and
a plurality of side structures provided between the pair of side walls to support the plurality of battery cells,
wherein the heat propagation prevention unit is provided at a bottom portion of the pair of side walls and a bottom portion of the plurality of side structures.

14. The battery pack according to claim 13,
wherein the heat propagation prevention unit is formed to protrude to a predetermined height from the bottom portion of the pair of side walls and the bottom portion of the plurality of side structures.

15. A vehicle comprising at least one battery pack according to any one of claims 1 to 14.
